# EUROPÄISCHE PATENTANMELDUNG

(11) **EP 4 786 213 A1**
(43) Veröffentlichungstag der Anmeldung: **05.08.2026**
(21) Anmeldenummer: 25155323.6
(22) Anmeldetag: 31.01.2025
(51) Int. Cl.: B60D 5/00, B61D 17/22, F16B 5/06

(54) **MONTAGESET FÜR EINEN ÜBERGANGSBALG SOWIE ÜBERGANGSBALG MIT EINEM MONTAGESET**

(71) Anmelder: Teufl, Manfred, 3332 Rosenau (AT); ULTIMATE Europe Transportation Equipment GmbH, 3304 St. Georgen am Ybbsfelde (AT)
(72) Erfinder: Schmoll, Lorenz Karl, 3393 Zelking-Matzleinsdorf (AT); Deinhofer, Philip Franz, 3353 Seitenstetten (AT)
(74) Vertreter: KLIMENT & HENHAPEL

(57) **Zusammenfassung**

Die Erfindung betrifft ein Montageset (1) für die lösbare Befestigung einer Bodenleiste (55) an einem Seitenrahmen (45) eines Übergangsbalgs (40), umfassend:
- eine Bolzenleiste (10) mit einer Bolzengrundplatte (11), wobei zwei Bolzen (12A,12B) an der Bolzengrundplatte befestigt sind und von dieser abstehen, wobei jeder Bolzen jeweils eine außenseitige Ringnut (18) mit einem Nutdurchmesser (19) aufweist;
- eine Sicherungsplatte (20) mit zwei Aufnahmen (21A,21B), die jeweils zu einer ersten Längskante (26) der Sicherungsplatte geöffnet sind und jeweils eine Rastausnehmung (22) mit einem Ausnehmungsdurchmesser (29) aufweisen, der so dimensioniert ist, dass jeweils ein Bolzen mit seiner Ringnut (18) in einer Rastausnehmung (22) fixierbar ist;
- wobei die Bolzenleiste (10) und die Sicherungsplatte (20) lösbar miteinander verbindbar sind und die Bolzenleiste so eingerichtet ist, dass jeweils die Ringnut (18) der Bolzen (12A,12B) in die Rastausnehmungen (22) der Aufnahmen (21A,21B) einrastbar sind und die Bolzengrundplatte in einem Weitenabstand (30) zur Sicherungsplatte fixierbar ist.

## Beschreibung

### GEBIET DER ERFINDUNG

Die Erfindung betrifft ein Montageset für einen Übergangsbalg zwischen zwei gelenkig miteinander verbundenen Fahrzeugteilen. Weiters betrifft die Erfindung einen solchen Übergangsbalg mit einem daran befestigten Montageset. Ein zusätzlicher Aspekt der Erfindung betrifft ein Verfahren zum Befestigen eines Montagesets an einem solchen Übergangsbalg.

### STAND DER TECHNIK

Ein elastischer Übergangsbalg wird beispielsweise bei einem Gelenkbus oder einem Schienenfahrzeug als Übergang zwischen zwei, vorzugsweise gelenkig, miteinander verbundenen Fahrzeugteilen eingesetzt, um den Wagenübergang im Fahrzeuginneren vor Witterung und Zugluft zu schützen. Ein solcher Übergangsbalg ist üblicherweise zwischen zwei benachbarten Stirnseiten der miteinander verbundenen Fahrzeugteile befestigt und umfasst ein Balgdach, Balgseitenwände sowie einen Balgboden, die gemeinsam eine flexible tunnelartige Übergangsabdeckung zwischen den verbundenen Fahrzeugteilen bilden. Der Übergangsbalg weist außerdem meist mehrere in Längsrichtung des Übergangsbalgs hintereinander angeordnete Leisten oder Seitenrahmenteile auf. Der Balgboden weist mehrere hintereinander angeordnete Bodenleisten auf. Mittels der entsprechenden Seitenrahmen und Bodenleisten wird gewährleistet, dass das Balgmaterial des Übergangsbalgs im Betrieb des jeweiligen Gelenkfahrzeugs "zieharmonikaartig" beweglich zusammengefaltet ist und der Außenkontur des Fahrzeugs folgt. Die Bodenleisten sorgen dafür, dass das daran befestigte Bodentuch im Betrieb des entsprechenden Gelenkfahrzeugs nicht am Boden schleift.

Da der Balgboden eines solchen Übergangsbalgs im laufenden Fahrbetrieb üblicherweise einem höheren Verschleiß ausgesetzt ist als die Balgseitenwände oder das Balgdach, ist üblicherweise der Balgboden als austauschbarer Bestandteil des Übergangsbalgs ausgelegt. Um den Balgboden erforderlichenfalls auswechseln zu können, sind die einander gegenüberliegenden Balgseitenwände im Bodenbereich jeweils etwa um 90° nach innen gebogen und bilden mit ihren einander gegenüberliegenden unteren Bereichen jeweils sogenannte Übergangsböden. Der mittig angeordnete Balgboden wird dazu mit geeigneten Verschlusseinrichtungen, beispielsweise mit Klettverschlüssen oder mit Reißverschlüssen, an den Längsrändern der seitlichen Übergangsböden befestigt. Der Balgboden selbst umfasst dazu ein Bodentuch, das üblicherweise aus demselben Material hergestellt ist wie die Balgseitenwände sowie das Balgdach. Das Bodentuch weist üblicherweise an seiner Unterseite mehrere hintereinander angeordnete Balgschlaufen auf, durch die in Einbaulage jeweils die Bodenleisten durchgesteckt sind. Die Bodenleisten wiederum sind in Einbaulage jeweils an den einander gegenüberliegenden freien Enden der Seitenrahmen der Balgseitenwände befestigt.

Zur Befestigung der Bodenleisten an den Seitenrahmen der Balgseitenwände sind aus dem Stand der Technik bereits unterschiedliche Ausführungen von Befestigungsmitteln bekannt.

In der Druckschrift EP 1 810 852 B1 werden sogenannte Federspangen zur Befestigung der freien Endabschnitte von lösbaren Bodenleisten des Balgbodens an den entsprechenden Seitenrahmen der Balgseitenwände vorgeschlagen. Die gezeigten Bodenleisten sowie die Rahmenenden der Seitenrahmen weisen jeweils in Einbaulage nach oben offene U-Profile auf, wobei die profilierten Bodenleisten innerhalb der U-förmigen Ausnehmungen der Seitenrahmenenden einsteckbar sind. Zur Montage der Bodenleisten am Übergangsbalg werden die freien Enden der Bodenleisten von oben in die U-förmigen Ausnehmungen innerhalb der Seitenrahmenenden eingesteckt. Die profilierten Seitenrahmenenden dienen in Einbaulage somit als Halterungen für die darin eingefügten gegenüberliegenden Enden der Bodenleisten. Jedes Seitenrahmenende sowie jedes dazu korrespondierende Leistenende einer Bodenleiste weist jeweils zwei voneinander in Längsrichtung beabstandete Durchgangsbohrungen auf, die in Einbaulage mit in die Seitenrahmenenden eingesteckten Bodenleisten jeweils deckungsgleich zu liegen kommen, wobei die beiden ineinander gesteckten Bauteile jeweils gemeinsame Durchgangsbohrungen bilden.

Die einstückigen Federspangen, welche in der EP 1 810 852 B1 als Verbindungsmittel vorgeschlagen werden, weisen ein Profil mit einem etwa U-förmigen Querschnitt auf. Zwei einander gegenüberliegende Schenkel der Federspangen umfassen an ihren oberen Randabschnitten jeweils zwei nach innen gebogene zackenförmige Ansätze, welche so voneinander beabstandet sind, dass jeweils zwei Ansätze eines Federspangenschenkels in Einbaulage jeweils von einander gegenüberliegenden Seiten in die jeweils zwei Durchgangsbohrungen auf einer Seite des äußeren Seitenrahmenendes sowie des dahinter befindlichen Endes einer Bodenleiste eingreifen. Zur Befestigung wird jede Federspange dazu von unten bzw. von außen auf ein Seitenrahmenende aufgesteckt, und zwar so, dass die insgesamt vier zackenförmigen Ansätze an den gegenüberliegenden Schenkeln einer Federspange jeweils von außen in die gegenüberliegenden Durchgangsbohrungen eingreifen.

Nachteilig an dieser Ausführung ist zumindest, dass die Federspangen in Einbaulage jeweils an den Unterseiten bzw. Außenseiten der Bodenleisten angesteckt sind und daher im laufenden Betrieb eines Gelenkfahrzeugs beschädigt werden können. Insbesondere bei Gelenkbussen kommt es im Fahrbetrieb regelmäßig vor, dass der zwischen den beiden miteinander verbundenen Fahrzeugteilen angeordnete Übergangsbalg im Bereich seiner Bodenleisten beispielsweise an Fahrbahnerhöhungen, erhöhten Haltestellenbereichen oder Verkehrsinseln anstreift. Die in der EP 1 810 852 B1 vorgeschlagenen Federspangen, welche nach unten hin die Bodenleisten umfassen und diese nach unten hin überragen, werden jedoch dabei beschädigt und müssen ersetzt werden. Als weiterer Nachteil dieser Ausführung wird hierzu festgehalten, dass zum Aufspreizen der Federspangen ein speziell geformtes, zangenartiges Werkzeug erforderlich ist. Einerseits ist die Montage dieser Federspangen somit aufwendig. Andererseits besteht beim Aufspreizen der Federspangen die Gefahr, dass die einander gegenüberliegenden Federspangenschenkel mit den daran gegengleich jeweils nach innen abstehenden Ansätzen überspannt oder zu stark aufgeweitet werden, sodass die Federwirkung der Federspangen verloren geht und die Federspangen nicht ausreichend fest an den Seitenrahmen befestigt werden können. In einem solchen Fall besteht die Gefahr, dass die unzureichend befestigten Federspangen im laufenden Fahrbetrieb verloren gehen oder zumindest die zackenförmigen Ansätze nicht in die Durchgangsbohrungen der innenliegenden Bodenleisten eingreifen und somit die Bodenleisten relativ zu den Seitenrahmenenden verrutschen können.

In der Druckschrift EP 2 106 984 B1 wird zur Lösung dieser vorgenannten Befestigungsaufgabe ein zweiteiliges Befestigungsmittel vorgeschlagen, welches als erstes Befestigungsmittel ein Sicherungselement mit einem Sicherungsbügel samt einem daran beabstandet befestigten ersten Bolzen umfasst. Das zweite Befestigungsmittel ist ein separater zweiter Bolzen. Wie zuvor bereits im Zusammenhang mit der EP 1 810 852 B1 beschrieben wurde ist auch bei der EP 2 106 984 B1 vorgesehen, dass zur Montage der Bodenleisten am Übergangsbalg die freien Enden der Bodenleisten von oben in die U-förmigen Ausnehmungen innerhalb der Seitenrahmenenden eingesteckt werden. Die profilierten Seitenrahmenenden dienen wiederum in Einbaulage als Halterungen für die darin eingefügten gegenüberliegenden Enden der Bodenleisten. Zur Montage des zweiteiligen Befestigungsmittels wird zuerst der separate zweite Bolzen in eine der korrespondierenden Durchgangsbohrungen eingesteckt. Anschließend wird der erste Bolzen des Sicherungselements in die jeweils benachbarte, noch freie Durchgangsbohrung eingesteckt und dabei der Sicherungsbügel des Sicherungselements in seine Einbaulage so verschwenkt, dass Sicherungsflächen mit Klemmabschnitten des Sicherungsbügels nach Art eines Schnappverschlusses an der Außenkontur der Seitenrahmenenden festgeklemmt werden und dabei den zuvor befestigten ersten Bolzen in seiner eingesteckten Position sichern.

Nachteilig ist auch an dieser Ausführung zumindest, dass die Sicherungsbügel der Sicherungselemente in Einbaulage jeweils die Unterseiten der Bodenleisten umgreifen und an den seitlichen Außenseiten der Bodenleisten angesteckt sind. Die Sicherungsbügel ragen also in Einbaulage nach unten über die Bodenleisten vor und können daher im laufenden Betrieb eines Gelenkfahrzeugs beschädigt werden. Außerdem ist bei der aus der EP 2 106 984 B1 bekanntgewordenen Ausführung problematisch, dass im laufenden Fahrzeugbetrieb die zweiteiligen Befestigungsmittel, sobald sich der Schnappverschluss des Sicherungsbügels des Sicherungselements durch Erschütterungen lockert oder löst, verloren gehen.

In der Druckschrift EP 3 868 582 A1 wird zur Lösung derselben gegenständlichen Befestigungsaufgabe ein zweiteiliges Befestigungsmittel mit zwei gegengleich gestalteten, identischen Befestigungselementen vorgeschlagen.

Wie bereits zuvor beschrieben ist auch bei der EP 3 868 582 A1 vorgesehen, dass zur Montage der Bodenleisten am Übergangsbalg die freien Enden der Bodenleisten von oben in die U-förmigen Ausnehmungen innerhalb der Seitenrahmenenden eingesteckt werden. Die profilierten Seitenrahmenenden dienen wiederum in Einbaulage als Halterungen für die darin eingefügten gegenüberliegenden Enden der Bodenleisten. Diese Konstruktionsweise ist jedoch bei der Montage und Demontage der Bodenleisten nachteilig, da die Bodenleisten zum Entnehmen aus den Seitenrahmenenden sowie umgekehrt zum Einstecken in die Seitenrahmenenden jeweils nach oben hin gegen das oberhalb befindliche Bodentuch des Balgbodens geschoben werden müssen.

Jedes Befestigungselement weist einen Körper auf, der einen Sitz und einen Bolzenstift umfasst, wobei der Bolzenstift des ersten Befestigungselements so konfiguriert ist, dass dieser in Ausnehmungen der Seitenrahmenenden und der innenseitig eingesteckten Bodenleisten eingesetzt und reversibel mit dem Sitz des zweiten Befestigungselements gekoppelt werden kann.

Wie bei den zuvor genannten, herkömmlichen Befestigungsmitteln ist auch bei den in der EP 3 868 582 A1 gezeigten gegengleich gestalteten, paarweise identischen Befestigungselementen von Nachteil, dass diese in Einbaulage jeweils an den Unterseiten bzw. Außenseiten der Bodenleisten angesteckt sind, wobei jeweils Griffnasen der paarweisen Befestigungselemente nach unten über die Bodenleisten hinaus vorstehen und daher im laufenden Betrieb eines Gelenkfahrzeugs beschädigt werden können. Außerdem kann man sich beim Hantieren an diesen nach unten vorstehenden Griffnasen verletzen.

### AUFGABE DER ERFINDUNG

Es ist daher Aufgabe der vorliegenden Erfindung, ein Montageset mit Befestigungsmitteln zur Montage von Bodenleisten an den Seitenrahmen der Balgseitenwände eines Übergangsbalgs zwischen zwei gelenkig miteinander verbundenen Fahrzeugteilen bereitzustellen, das die oben genannten Nachteile überwindet und bei dem die Befestigungsmittel in Einbaulage so angeordnet sind, dass diese während des laufenden Fahrbetriebs eines Gelenkfahrzeugs weder beschädigt werden, noch verloren gehen. Eine weitere Aufgabe der vorliegenden Erfindung besteht darin, einen Übergangsbalg bereitzustellen, bei dem der Balgboden in besonders einfacher Weise austauschbar und mittels eines erfindungsgemäßen Montagesets mit dem Übergangsbalg rasch und sicher verbindbar ist. Außerdem ist eine Aufgabe der vorliegenden Erfindung, ein Verfahren zum Befestigen eines erfindungsgemäßen Montagesets an einem solchen Übergangsbalg anzugeben.

### DARSTELLUNG DER ERFINDUNG

Zur Lösung der genannten Aufgabe wird erfindungsgemäß ein Montageset für die lösbare Befestigung einer Bodenleiste an einem Seitenrahmen eines zwischen zwei, vorzugsweise gelenkig, miteinander verbundenen Fahrzeugteilen angeordneten Übergangsbalgs bereitgestellt, wobei das Montageset umfasst:
- eine Bolzenleiste mit einer Bolzengrundplatte sowie mit einem ersten Bolzen und einem vom ersten Bolzen beabstandeten zweiten Bolzen, wobei die zwei Bolzen jeweils an der Bolzengrundplatte befestigt sind und jeweils in derselben Bolzenachsenrichtung von der Bolzengrundplatte abstehen, wobei jeder Bolzen jeweils eine außenseitige Ringnut mit einem Nutdurchmesser aufweist;
- eine Sicherungsplatte mit einer ersten Aufnahme und einer davon beabstandeten zweiten Aufnahme, wobei die zwei Aufnahmen jeweils zu einer ersten Längskante der Sicherungsplatte geöffnet sind und jeweils eine Rastausnehmung mit einem Ausnehmungsdurchmesser aufweisen, welcher Ausnehmungsdurchmesser so dimensioniert ist, dass jeweils ein Bolzen mit seiner Ringnut in der Rastausnehmung fixierbar ist, wobei der Abstand der Aufnahmen der Sicherungsplatte zueinander mit dem Abstand der Bolzen der Bolzenleiste zueinander korrespondiert;
- wobei die Bolzenleiste und die Sicherungsplatte lösbar miteinander verbindbar sind und dazu die Bolzenleiste so eingerichtet ist, dass die Ringnut des ersten Bolzens in die Rastausnehmung der ersten Aufnahme und die Ringnut des zweiten Bolzens in die Rastausnehmung der zweiten Aufnahme der Sicherungsplatte einrastbar sind, wobei in miteinander verbundener Lage die Bolzengrundplatte in einem lichten Weitenabstand zur Sicherungsplatte fixierbar ist.

Definitionsgemäß wird im Folgenden unter dem Begriff des jeweils "korrespondierenden" Abstands der Aufnahmen der Sicherungsplatte zueinander mit dem Abstand der Bolzen der Bolzenleiste zueinander verstanden, dass geringfügige Verformungen sowohl der Sicherungsplatte, als auch der Bolzenleiste aufgrund von Fertigungsungenauigkeiten zulässig sind. Die Rastausnehmungen in den Aufnahmen der Sicherungsplatte sind so gestaltet, dass diese jeweils an eine Ringnut des jeweiligen Bolzens ansteckbar sind. Die Rastausnehmungen sind vorzugsweise in Form zweier einander gegenüberliegender Kreisbogenabschnitte geformt, die in befestigter Lage des Montagesets jeweils abschnittsweise passgenau an einander gegenüberliegenden Umfangsabschnitten der Ringnut anliegen oder an diese angepresst sind und somit die Bolzenleiste fixieren.

Zum Herstellen dieser lösbaren formschlüssigen Verbindung, bei der eine axiale Lagesicherung der Bolzen in den Aufnahmen der Sicherungsplatte erzielt wird, ist eine gewisse Anpresskraft erforderlich.

Das Montageset ist vorteilhaft besonders einfach und komfortabel in der Handhabung. So ist es erforderlichenfalls möglich, die Sicherungsplatte mit einer Hand an den beiden Bolzen der Bolzengrundplatte aufzusetzen und zu fixieren. In zusammengesteckter Lage des Montagesets ist zwischen der Bolzengrundplatte und der Sicherungsplatte ein lichter Weitenabstand festgelegt, um zwischen der Bolzengrundplatte und der Sicherungsplatte einen Abschnitt einer Bodenleiste sowie einen Rahmenabschnitt eines Seitenrahmens eines Übergangsbalgs miteinander zu fixieren. Der Weitenabstand in befestigter Lage des Montagesets entspricht in Richtung einer Bolzenachse gesehen dem Abstand der Ringnut bzw. des Einstichs des jeweiligen Bolzens von der Bolzengrundplatte.

Weitere vorteilhafte Ausführungsformen der Erfindung sind in den abhängigen Ansprüchen sowie in der nachfolgenden Beschreibung dargelegt. Ferner dienen die im Folgenden verwendeten Positionsangaben von Bauteilen oder Komponenten, wie beispielsweise die Begriffe "oben", "unten", "oberhalb", "unterhalb", "vorne", "hinten", "seitlich", "innerhalb", "außerhalb", "in axialer Richtung", "in radialer Richtung" und dergleichen, im Wesentlichen dem besseren Verständnis der Erfindung, insbesondere in Verbindung mit den nachfolgenden Zeichnungen. Die verwendeten Positionsangaben können sich möglicherweise auf bestimmte Positionen von einzelnen Bauteilen oder Komponenten eines erfindungsgemäßen Montagesets selbst, eines erfindungsgemäßen Montagesets im Einsatz bzw. im Zusammenwirken mit einem gattungsgemäßen Übergangsbalg, oder auf einzelnen Ansichten in den Figuren beziehen. In jedem Fall sind solche Positionsangaben dem Fachmann geläufig.

In einer bevorzugten Ausführung der Erfindung kann bei einem Montageset jeder der zwei Bolzen der Bolzenleiste jeweils einen freien Bolzenkopf aufweisen, wobei vorzugsweise die zwei Bolzen baugleich ausgeführt sind und jeweils denselben Bolzendurchmesser aufweisen.

Unter dem Begriff "baugleich" wird definitionsgemäß im Folgenden verstanden, dass die zwei Bolzen im Wesentlichen gleich dimensioniert sind. Geringfügige Abweichungen wie beispielsweise unwesentlich unterschiedliche Bolzendurchmesser, wie diese aufgrund von Fertigungsungenauigkeiten auftreten können, sind allerdings erlaubt.

Um ein besonders komfortabel handzuhabendes Montageset bereitzustellen, können in einer weiteren erfindungsgemäßen Ausführung bei einem Montageset die zwei Aufnahmen der Sicherungsplatte jeweils einen konischen Einführabschnitt aufweisen, wobei der konische Einführabschnitt jeweils zwischen einer Rastausnehmung und der ersten Längskante der Sicherungsplatte angeordnet ist und sich von der jeweiligen Rastausnehmung in Richtung zur ersten Längskante hin weitet.

Die konischen Einführabschnitte erleichtern das Ansetzen bzw. Anstecken der Sicherungsplatte an den Bolzen der Bolzenleiste. Die konischen Einführabschnitte sind Bestandteil der Aufnahmen und sind zwischen der ersten Längskante der Sicherungsplatte und der jeweiligen Rastausnehmung positioniert.

Besonders zweckmäßig kann es sein, wenn bei einem erfindungsgemäßen Montageset die zwei Aufnahmen der Sicherungsplatte jeweils einen Dehnungsspalt aufweisen, wobei der Dehnungsspalt jeweils an der der ersten Längskante abgewandten Seite der Rastausnehmungen angeordnet ist und sich ausgehend von der jeweiligen Rastausnehmung in einer zu der ersten Längskante quer angeordneten, vorzugsweise normal angeordneten, Richtung erstreckt.

Wie zuvor bereits erwähnt sind die Rastausnehmungen in den Aufnahmen der Sicherungsplatte so gestaltet, dass diese jeweils an eine Ringnut des jeweiligen Bolzens ansteckbar sind. Die Rastausnehmungen sind vorzugsweise in Form zweier einander gegenüberliegender Kreisbogenabschnitte geformt, die in befestigter Lage des Montagesets jeweils abschnittsweise passgenau an einander gegenüberliegenden Umfangsabschnitten der Ringnut anliegen oder an diese angepresst sind und somit die Bolzenleiste fixieren.

Zum Herstellen der lösbaren formschlüssigen Verbindung, bei der eine axiale Lagesicherung der Bolzen in den Aufnahmen der Sicherungsplatte erzielt wird und bei der die Rastausnehmungen der Sicherungsplatte aufgrund ihrer geometrischen Form jeweils in eine Ringnut eines Bolzens der Bolzenleiste ineinandergreifen, ist eine gewisse Anpresskraft erforderlich. Um das Einstecken oder Einschnappen der jeweiligen Ringnut der Bolzen in die formschlüssige Passung der entsprechenden Rastaufnehmung zu erleichtern, sind die Dehnungsspalten in den Aufnahmen vorgesehen. Die Dehnungsspalten erhöhen die elastische Verformbarkeit der Sicherungsplatte. Insbesondere bei der Verwendung beispielsweise von Edelstahl, vorzugsweise von Federstahl, zur Fertigung der beiden Teile des Montagesets, erhöhen die Dehnungsspalten die elastische Verformbarkeit der korrespondierenden Bolzen der Bolzenleiste bzw. der Aufnahmen der Sicherungsplatte, um die beiden Teile des Montagesets gegebenenfalls auch mehrmals ohne bleibende Verformung miteinander verbinden und auch wieder voneinander trennen zu können. Um die Handhabung eines erfindungsgemäßen Montagesets weiter zu erleichtern, kann es vorteilhaft sein, wenn die Sicherungsplatte an einer der ersten Längskante gegenüberliegenden Längsseite eine Griffleiste aufweist, wobei sich die Griffleiste vorzugsweise in Längsrichtung der Sicherungsplatte erstreckt.

In einer Weiterbildung dieser erfindungsgemäßen Ausführung kann bei einem Montageset die Griffleiste einteilig mit der Sicherungsplatte verbunden sein.

Um die Herstellung der Griffleiste an der Sicherungsplatte zu erleichtern, kann bei einem erfindungsgemäßen Montageset vorgesehen sein, dass die Griffleiste ein gebogener oder gefalzter Randabschnitt der Sicherungsplatte ist, wobei ein Winkel zwischen der Griffleiste und der Sicherungsplatte von 70° bis 110°, vorzugsweise von 80° bis 100°, besonders bevorzugt 90°, beträgt.

Um eine möglichst rasche Montage und gegebenenfalls auch Demontage des Montagesets zu gewährleisten, kann es in einer weiteren Ausführung der Erfindung zweckmäßig sein, wenn bei einem Montageset ein in Richtung der jeweiligen Bolzenachse gesehener Abstand von der Bolzenleiste bis zur außenseitigen Ringnut des jeweiligen Bolzens jeweils dem lichten Weitenabstand entspricht, in welchem die Bolzenleiste und die Sicherungsplatte in miteinander verbundener Lage fixierbar sind.

In einer weiteren Ausführung kann es bei einem erfindungsgemäßen Montageset vorteilhaft sein, wenn die zwei Bolzen normal zur Bolzengrundplatte befestigt sind, wobei die Bolzenachsen im Wesentlichen rechtwinkelig zur Bolzengrundplatte verlaufen.

Unter dem Begriff "normal" ist eine im Wesentlichen rechtwinkelige Ausrichtung der Bolzen in Bezug zur Bolzengrundplatte zu verstehen, wobei geringe Fertigungsungenauigkeiten zulässig sind.

Die eingangs genannte Aufgabe wird auch durch Bereitstellen eines Übergangsbalgs zwischen zwei, vorzugsweise gelenkig, miteinander verbundenen Fahrzeugteilen mit einem daran befestigten erfindungsgemäßen Montageset gelöst.

Die eingangs genannten Vorteile und vorteilhaften Wirkungen des erfindungsgemäßen Montagesets gelten sinngemäß ebenso für einen Übergangsbalg mit einem daran befestigten erfindungsgemäßen Montageset.

In einer Weiterbildung der Erfindung kann bei einem solchen Übergangsbalg, der zwei einander gegenüberliegende Balgseitenwände sowie einen auswechselbaren Balgboden umfasst,
wobei jeweils in Einbaulage
   - jede Balgseitenwand jeweils mit mehreren Seitenrahmen verbunden ist,
   - der Balgboden jeweils mit mehreren Bodenleisten verbunden ist, und
   - zumindest ein Randabschnitt des Balgbodens mit einer Verschlusseinrichtung mit einer Balgseitenwand verbunden ist,
wobei in befestigter Lage des Montagesets die Bolzenleiste und die Sicherungsplatte so miteinander fixiert sind, dass innerhalb des lichten Weitenabstands zwischen der Bolzengrundplatte und der Sicherungsplatte jeweils ein Leistenabschnitt, vorzugsweise ein Leistenende, einer Bodenleiste an einem Rahmenabschnitt, vorzugsweise an einem Rahmenende, eines Seitenrahmens ortsfest befestigt ist.

Der hier verwendete Begriff "ortsfest befestigt" umfasst unterschiedliche Befestigungsarten. Beispielsweise ist es im Rahmen der Erfindung denkbar, dass eine Bodenleiste mit einem Seitenrahmen mittels einer klemmenden Verbindung oder einer formschlüssigen Verbindung miteinander ortsfest befestigt sind. In einer bevorzugten Ausführung der Erfindung können auch Durchgangsbohrungen an den Rahmenabschnitten eines Seitenrahmens und/oder an Abschnitten einer Bodenleiste angeordnet sein, in die die Bolzen der Bolzenleiste eingesteckt werden können.

Balgboden und Balgseitenwand sind in Einbaulage an ihren Rändern mit zumindest einer Verschlusseinrichtung, beispielsweise mit einem Klettverschluss oder einem Zippverschluss, lösbar miteinander verbunden.

Um zu gewährleisten, dass das Montageset in Einbaulage am Übergangsbalg eines Gelenkfahrzeugs während des laufenden Fahrbetriebs nicht beschädigt wird, kann es vorteilhaft sein, wenn in befestigter Lage des Montagesets die Bolzenleiste und die Sicherungsplatte jeweils so miteinander fixiert sind, dass in Höhenrichtung gesehen die Bolzenleiste um einen ersten Höhenabstand sowie die Sicherungsplatte um einen zweiten Höhenabstand jeweils erhöht in Bezug zu einem Höhenniveau einer Balgunterkante, vorzugsweise einer Unterkante einer Bodenleiste oder eines Rahmenabschnitts eines Seitenrahmens, angeordnet sind.

In Einbaulage kann der relative Höhenabstand von Bolzenleiste und Sicherungsplatte in Bezug zu einer Balgunterkante entweder unterschiedlich oder auch jeweils gleich groß sein. Durch die Überhöhung der Bolzenleiste und der Sicherungsplatte in Einbaulage des Montagesets in Bezug zur Balgunterkante werden die Bauteile des Montagesets nicht beschädigt, wenn der Übergangsbalg eines Gelenkfahrzeugs während des Fahrbetriebs beispielsweise am Boden, der Fahrbahn oder einer Verkehrsinsel "aufsitzt".

In einer weiteren bevorzugten Ausführung der Erfindung kann bei einem Übergangsbalg jeder Seitenrahmen, vorzugsweise an seinem Rahmenende, jeweils zwei voneinander beabstandete Durchgangsbohrungen aufweisen und jede Bodenleiste, vorzugsweise an ihren gegenüberliegenden freien Leistenenden, jeweils zwei voneinander beabstandete Durchgangsbohrungen aufweisen, wobei in Einbaulage jeweils ein Leistenabschnitt, vorzugsweise ein Leistenende, der Bodenleiste mit jeweils einem Rahmenabschnitt, vorzugsweise einem Rahmenende, des Seitenrahmens verbunden ist und die Durchgangsbohrungen der Bodenleisten korrespondierend zu den Durchgangsbohrungen der Seitenrahmen angeordnet sind, wobei das Montageset so angeordnet ist, dass in befestigter Lage die beiden Bolzen der Bolzenleiste jeweils durch die deckungsgleich angeordneten, korrespondierenden Durchgangsbohrungen des Seitenrahmens sowie der Bodenleiste hindurchgesteckt sind, und wobei die Sicherungsplatte an der der Bolzengrundplatte gegenüberliegenden Seite des Seitenrahmens oder der Bodenleiste angeordnet ist, wobei die Ringnut des ersten Bolzens in die Rastausnehmung der ersten Aufnahme und die Ringnut des zweiten Bolzens in die Rastausnehmung der zweiten Aufnahme der Sicherungsplatte eingerastet sind.

In dieser Ausführungsvariante können das jeweilige Seitenrahmenende und die Bodenleiste zueinander unterschiedlich positioniert sein: Beispielsweise können der jeweilige Abschnitt eines Seitenrahmens sowie ein Abschnitt einer Bodenleiste in beliebiger Reihenfolge ineinander positioniert sein. So kann beispielsweise ein Abschnitt der Bodenleiste innerhalb des Seitenrahmenendes eingesteckt sein, oder umgekehrt außerhalb an einen Seitenrahmenabschnitt angesteckt sein. Alternativ dazu können ein Seitenrahmenende sowie ein Abschnitt der Bodenleiste auch seitlich nebeneinander positioniert sein. In einer bevorzugten Variante der Erfindung wird die Bolzenleiste dabei so eingesteckt, dass die Bolzengrundplatte vorzugsweise am Seitenrahmen oder an der Bodenleiste anliegt. In einer besonders bevorzugten Ausführung kann das Montageset so bemessen sein, dass zusätzlich auch die gegenüberliegende Sicherungsplatte in an der Bolzenleiste befestigter Lage ebenfalls am Seitenrahmen oder an der Bodenleiste anliegt.

Um bei einem erfindungsgemäßen Übergangsbalg den Balgboden samt dem Bodentuch besonders einfach und rasch wechseln zu können, kann es vorteilhaft sein, wenn zumindest eine Bodenleiste an zumindest einem Rahmenabschnitt eines Seitenrahmens ansteckbar ist.

Um eine möglichst stabile Verbindung zwischen einer Bodenleiste und einem Seitenrahmen eines erfindungsgemäßen Übergangsbalgs zu erzielen, kann es vorteilhaft sein, dass zumindest eine Bodenleiste ein U-förmiges Profil mit einer Außenbreite der beiden Profilschenkel sowie mit einer U-förmigen Profilausnehmung mit einer lichten Innenweite zwischen den beiden Profilschenkeln aufweist, und dass zumindest ein Seitenrahmen ein U-förmiges Profil mit einer Außenbreite aufweist, welche Außenbreite des Seitenrahmens kleiner oder gleich der lichten Innenweite der U-förmigen Profilausnehmung der Bodenleiste ist, wobei in Einbaulage ein Rahmenabschnitt des Seitenrahmens innerhalb der Bodenleiste eingesteckt ist.

Die eingangs genannte Aufgabe wird außerdem durch ein erfindungsgemäßes Verfahren zum Befestigen eines Montagesets an einem Übergangsbalg zwischen zwei, vorzugsweise gelenkig, miteinander verbundenen Fahrzeugteilen gelöst, wobei das Montageverfahren die folgenden Schritte umfasst:
-a- Bereitstellen eines Übergangsbalgs mit zwei einander gegenüberliegenden Balgseitenwänden sowie mit einem auswechselbaren Balgboden, wobei in Einbaulage jede Balgseitenwand jeweils mit mehreren Seitenrahmen verbunden ist und jeder Seitenrahmen an seinem Rahmenende jeweils zwei voneinander beabstandete Durchgangsbohrungen aufweist, wobei der Balgboden in Einbaulage jeweils mit mehreren Bodenleisten verbunden ist und jede Bodenleiste an ihren gegenüberliegenden freien Leistenenden jeweils zwei voneinander beabstandete Durchgangsbohrungen aufweist;
-b- Anstecken eines Leistenabschnitts, vorzugsweise eines Leistenendes, einer Bodenleiste an einem Rahmenabschnitt, vorzugsweise an einem Rahmenende, eines Seitenrahmens derart, dass zumindest ein Abschnitt der Bodenleiste zumindest einen Abschnitt des Seitenrahmens umgibt oder umgekehrt zumindest ein Abschnitt des Seitenrahmens zumindest einen Abschnitt der Bodenleiste umgibt, und wobei die zwei Durchgangsbohrungen der Bodenleiste deckungsgleich mit den korrespondierenden zwei Durchgangsbohrungen des Seitenrahmens positioniert sind;
-c- Seitliches Einführen der zwei Bolzen der Bolzenleiste in die zwei deckungsgleich angeordneten Durchgangsbohrungen sowohl des Seitenrahmens, als auch der Bodenleiste, bis die zwei Bolzen durch die Durchgangsbohrungen des Seitenrahmens und der Bodenleiste hindurchragen und jeder der zwei Bolzen mit seiner außenseitigen Ringnut jeweils die Durchgangsbohrungen überragt;
-d- Ansetzen der Sicherungsplatte an den zwei Bolzen, wobei die Ringnut des ersten Bolzens in die erste Aufnahme und die Ringnut des zweiten Bolzens in die zweite Aufnahme der Sicherungsplatte eingeführt wird;
-e- Fixieren der Sicherungsplatte an den Bolzen der Bolzenleiste, wobei jede der zwei Rastausnehmungen er Sicherungsplatte jeweils in eine Ringnut eines der zwei Bolzen eingerastet wird und die Bolzengrundplatte in einem lichten Weitenabstand zur Sicherungsplatte positioniert wird.

Für die Demontage des Montagesets wird in zweckmäßiger Weise die Durchführung der Verfahrensschritte in umgekehrter Abfolge, beginnend mit Schritt -e-, empfohlen.

Die vorgenannten Vorteile und Wirkungen hinsichtlich eines erfindungsgemäßen Montagesets sowie eines erfindungsgemäßen Übergangsbalgs gelten gleichermaßen sinngemäß auch für das erfindungsgemäße Montageverfahren.

Um zu gewährleisten, dass das Montageset in Einbaulage am Übergangsbalg eines Gelenkfahrzeugs während des laufenden Fahrbetriebs nicht beschädigt wird, kann das erfindungsgemäße Verfahren vorteilhaft so geführt werden, dass in befestigter Lage des Montagesets die Bolzenleiste und die Sicherungsplatte jeweils so miteinander fixiert werden, dass in Höhenrichtung gesehen die Bolzenleiste um einen ersten Höhenabstand sowie die Sicherungsplatte um einen zweiten Höhenabstand jeweils erhöht in Bezug zu einem Höhenniveau einer Balgunterkante, vorzugsweise einer Unterkante einer Bodenleiste oder eines Rahmenabschnitts eines Seitenrahmens, positioniert werden.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken darlegen.

Es zeigen:
**Fig. 1** in einer isometrischen Explosionsdarstellung schräg von oben die Bolzenleiste und die Sicherungsplatte eines erfindungsgemäßen Montagesets getrennt voneinander;
**Fig. 1A** eine vergrößerte Detailansicht des in Fig. 1 markierten Ausschnitts A;
**Fig. 2** in einer Schrägansicht von oben das in Fig. 1 gezeigte Montageset mit der Sicherungsplatte im Bildvordergrund, wobei die Bolzenleiste und die Sicherungsplatte miteinander verbunden sind;
**Fig. 3** in einer Schrägansicht von oben das in Fig. 1 gezeigte Montageset mit der Bolzenleiste im Bildvordergrund, wobei die Bolzenleiste und die Sicherungsplatte miteinander verbunden sind;
**Fig. 4** in einer Seitenansicht das in Fig. 2 gezeigte Montageset;
**Fig. 5** in einer Schrägansicht von oben einen Ausschnitt eines Übergangsbalgs mit einem daran befestigten Montageset;
**Fig. 6** in einer Schrägansicht von unten einen Ausschnitt einer Unterseite des in Fig. 5 gezeigten Übergangsbalgs mit mehreren daran befestigten Montagesets;
**Fig. 7** in einer Schrägansicht von der Seite eine Bolzenleiste vor deren Befestigung in Durchgangsbohrungen eines Seitenrahmens sowie einer Bodenleiste des in Fig. 6 gezeigten Übergangsbalgs;
**Fig. 8** in einer Schrägansicht von unten zwei Bolzenleisten, die jeweils bereits in den Durchgangsbohrungen eines Seitenrahmens sowie einer Bodenleiste des in Fig. 6 gezeigten Übergangsbalgs eingeführt sind;
**Fig. 9** in einer Schrägansicht von unten eine Sicherungsplatte vor deren Befestigung an einer der in Fig. 8 gezeigten Bolzenleisten;
**Fig. 10** die in Fig. 8 gezeigte Anordnung, wobei jeweils eine Sicherungsplatte an jeder Bolzenleiste befestigt ist;
**Fig. 11** in einer teilweisen Schnittansicht von der Seite Details eines Übergangsbalgs mit einem Seitenrahmen und einer unterhalb befindlichen, separaten Bodenleiste;
**Fig. 12** die in Fig. 11 gezeigte Anordnung, wobei die Bodenleiste bereits am Seitenrahmen angesteckt ist, vor dem seitlichen Einführen einer Bolzenleiste;
**Fig. 13** die in Fig. 12 gezeigte Anordnung, wobei die Bolzenleiste bereits in Durchgangsbohrungen des Seitenrahmens sowie der Bodenleiste eingeführt ist;
**Fig. 14** die in Fig. 13 gezeigte Anordnung, vor dem Ansetzen einer Sicherungsplatte zum Fixieren der Bolzenleiste;
**Fig. 15** die in Fig. 14 gezeigte Anordnung, wobei die Sicherungsplatte zum Fixieren der Bolzenleiste bereits justiert wurde;
**Fig. 16** das befestigte Montageset am Übergangsbalg, wobei die Sicherungsplatte an der Bolzenplatte fixiert ist;
**Fig. 17** in einer Schrägansicht von oben einen Übergangsbalg mit einem daran befestigten Montageset.

### WEGE ZUR AUSFÜHRUNG DER ERFINDUNG

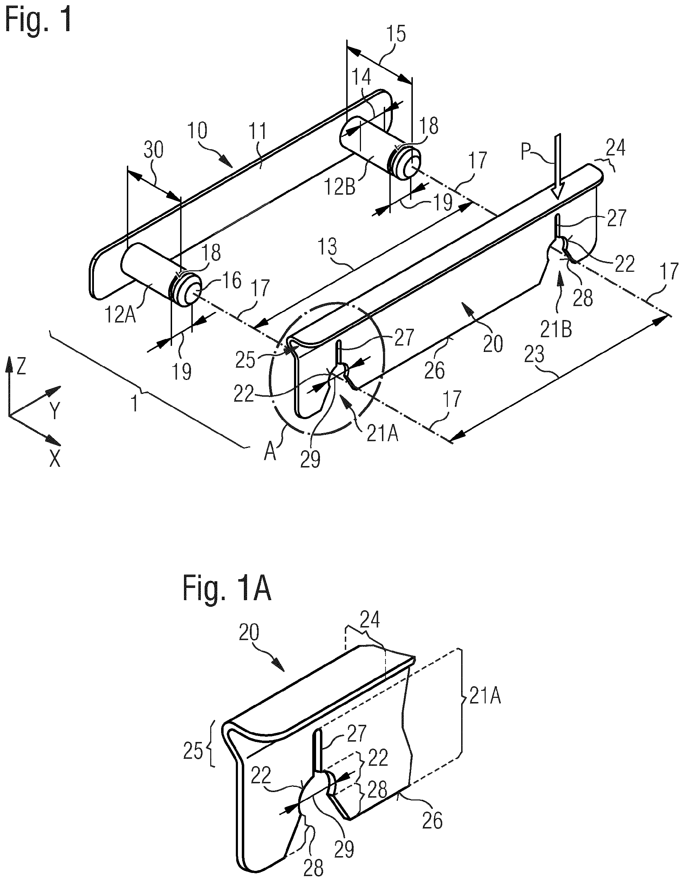

Die **Figuren 1 bis 4** betreffen jeweils eine erste Ausführungsform eines erfindungsgemäßen Montagesets 1. Die folgende Figurenbeschreibung bezieht sich gleichermaßen auf die in den Figuren 1 bis 4 gezeigten Bauteile und Komponenten.

Das Montageset 1 umfasst eine Bolzenleiste 10 mit einer Bolzengrundplatte 11 sowie mit einem ersten Bolzen 12A und einem zweiten Bolzen 12B. Der erste Bolzen 12A ist vom zweiten Bolzen 12B um einen Abstand 13, in einer Längsrichtung der Bolzengrundplatte 11 gesehen, beabstandet. Die zwei Bolzen 12A,12B sind hier jeweils im Wesentlichen baugleich ausgeführt und weisen jeweils einen Bolzendurchmesser 14, eine Bolzenlänge 15, einen Bolzenkopf 16 sowie eine Bolzenachse 17 auf.

Die zwei Bolzen 12A,12B sind jeweils an der Bolzengrundplatte 11 befestigt und stehen jeweils in derselben Bolzenachsenrichtung 17 von der Bolzengrundplatte 11 ab, wobei die Bolzenachsen 17 im Wesentlichen rechtwinkelig zur Bolzengrundplatte 11 verlaufen. Jeder Bolzen 12A,12B weist jeweils eine außenseitige Ringnut 18 mit einem Nutdurchmesser 19 auf. Die Ringnut 18 ist eine Sonderform einer gedrehten Nut, die auch als Einstich bezeichnet wird.

Das Montageset 1 umfasst weiters eine Sicherungsplatte 20 mit einer ersten Aufnahme 21A und einer zweiten Aufnahme 21B. Jede der zwei Aufnahmen 21A,21B weist jeweils einen Abschnitt mit einer Rastausnehmung 22 auf. Die erste Aufnahme 21A ist von der zweiten Aufnahme 21B um einen Abstand 23, in einer Längsrichtung der Sicherungsplatte 20 gesehen, beabstandet.

Zur leichteren Betätigung weist die Sicherungsplatte 20 entlang einer Längsseite eine Griffleiste 24 auf. In der hier gezeigten Ausführung ist die Griffleiste 24 einteilig mit der Sicherungsplatte 20 verbunden. Die Griffleiste 24 ist hier ein Randabschnitt der Sicherungsplatte 20, der mittels eines Biegeabschnitts 25 bzw. eines Falzabschnitts 25 mit der Sicherungsplatte 20 verbunden ist.

Ein Winkel α zwischen der Griffleiste 24 und der Sicherungsplatte 20 beträgt hier beispielsweise etwa 90°.

Die Sicherungsplatte 20 hat eine erste Längskante 26. Die Griffleiste 24 ist an der der ersten Längskante 26 gegenüberliegenden Längsseite positioniert. Die zwei Aufnahmen 21A,21B sind jeweils zur ersten Längskante 26 der Sicherungsplatte 20 hin geöffnet.

Die zwei Aufnahmen 21A,21B der Sicherungsplatte 20 weisen jeweils einen Dehnungsspalt 27 auf, wobei der Dehnungsspalt 27 jeweils an der der ersten Längskante 26 abgewandten Seite der Rastausnehmungen 22 angeordnet ist und sich ausgehend von der jeweiligen Rastausnehmung 22 in einer zu der ersten Längskante 26 quer angeordneten, hier beispielsweise normal angeordneten, Richtung erstreckt.

Die zwei Aufnahmen 21A,21B der Sicherungsplatte 20 weisen außerdem jeweils einen konischen Einführabschnitt 28 auf, wobei der konische Einführabschnitt 28 jeweils zwischen einer Rastausnehmung 22 und der ersten Längskante 26 der Sicherungsplatte 20 angeordnet ist und sich von der jeweiligen Rastausnehmung 22 in Richtung zur ersten Längskante 26 hin weitet.

Jede der zwei Aufnahmen 21A,21B weist jeweils eine Rastausnehmung 22 mit einem Ausnehmungsdurchmesser 29 auf. Der Ausnehmungsdurchmesser 29 ist dabei so dimensioniert, dass jeweils ein Bolzen 12A,12B der Bolzenleiste 10 mit seiner Ringnut 18 in der Rastausnehmung 22 fixierbar ist, wobei der Abstand 23 der Aufnahmen 21A,21B der Sicherungsplatte 20 zueinander mit dem Abstand 13 der Bolzen 12A,12B der Bolzenleiste 10 zueinander korrespondiert.

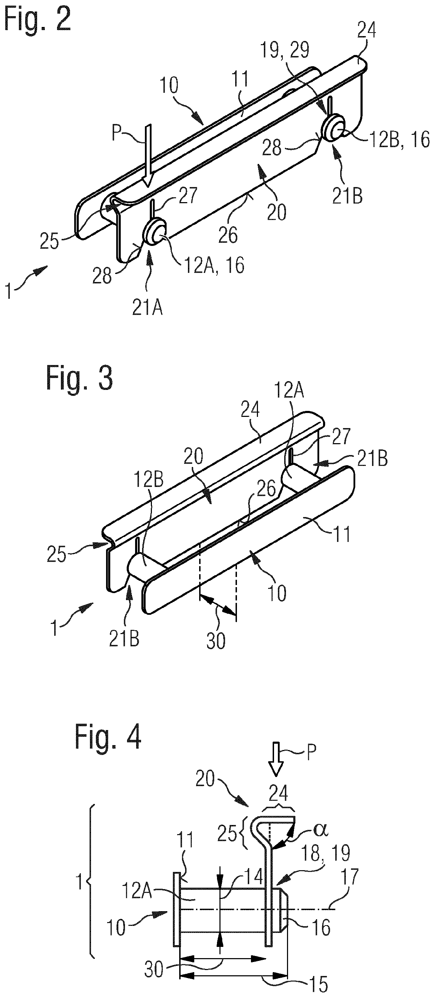

Die Bolzenleiste 10 und die Sicherungsplatte 20 sind lösbar miteinander verbindbar, wobei die Bolzenleiste 10 dazu so eingerichtet ist, dass die Ringnut 18 des ersten Bolzens 12A in die Rastausnehmung 22 der ersten Aufnahme 21A und die Ringnut 18 des zweiten Bolzens 12B in die Rastausnehmung 22 der zweiten Aufnahme 21B der Sicherungsplatte 20 einrastbar sind, wobei in miteinander verbundener Lage die Bolzengrundplatte 11 in einem lichten Weitenabstand 30 zur Sicherungsplatte 20 fixierbar ist. Der Weitenabstand 30 zwischen der Bolzengrundplatte 11 und der Sicherungsplatte 20 in verbundener Lage des Montagesets 1 ist beispielsweise in der in Fig. 4 gezeigten Seitenansicht ersichtlich. Der Weitenabstand 30 entspricht in Richtung der Bolzenachse 17 gesehen dem Abstand der Ringnut 18 bzw. des Einstichs 18 von der Bolzengrundplatte 11, wie dies in Fig.1 veranschaulicht ist.

Mit dem Pfeil P ist die Betätigungsrichtung P symbolisiert, mit der die Griffleiste 24 nach dem Ansetzen der Sicherungsplatte 20 an den Bolzen 12A,12B der Bolzenleiste 10 betätigt wird, um die Rastausnehmungen 22 der Sicherungsplatte 20 jeweils in eine Ringnut 18 der zwei Bolzen 12A,12B einzurasten und die Bolzengrundplatte 11 in einem lichten Weitenabstand 30 zur Sicherungsplatte 20 zu fixieren.

In Fig. 1 ist links im Bild ein kartesisches Koordinatensystem mit den Pfeilen X,Y,Z eingezeichnet, welche die X-Achsenrichtung, die Y-Achsenrichtung sowie die Z-Achsenrichtung des Koordinatensystems symbolisieren.

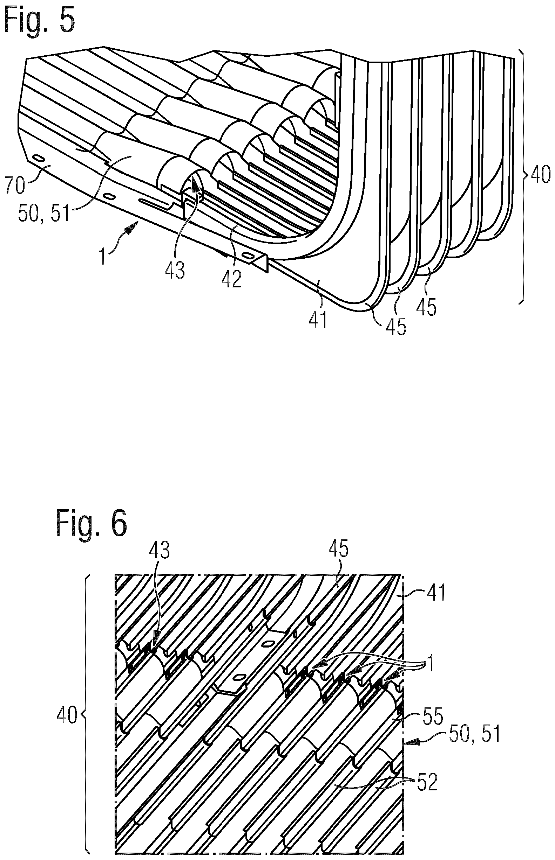

**Fig. 5** zeigt einen Ausschnitt eines Übergangsbalgs 40 mit einem daran befestigten Montageset 1.

Der Übergangsbalg 40 hat zwei einander gegenüberliegende Balgseitenwände 41, welche an ihren Innenseiten Umlaufkanten 42 bilden.

Zur Befestigung der Balgseitenwände 41 mit einem Randabschnitt eines separaten Balgbodens 50 dienen Verschlusseinrichtungen 43, die hier beispielsweise als Klettverschluss zwischen der jeweiligen Balgseitenwand 41 und dem Balgboden 50 positioniert sind. Der Balgboden 50 umfasst ein Bodentuch 51, das hier beispielsweise aus demselben Material hergestellt ist wie die Balgseitenwände. Um den Balgboden 50 bzw. das Bodentuch 51 auswechseln zu können, sind die einander gegenüberliegenden Balgseitenwände 41 im Bodenbereich jeweils etwa um 90° nach innen gebogen und bilden mit ihren einander gegenüberliegenden unteren Bereichen jeweils sogenannte Übergangsböden. Der mittig angeordnete Balgboden 50 wird dazu mit geeigneten Verschlusseinrichtungen 43, beispielsweise mit Klettverschlüssen, an den Längsrändern von seitlichen Übergangsböden der Balgseitenwände 41 befestigt.

Jede Balgseitenwand 41 ist jeweils mit mehreren Seitenrahmen 45 verbunden, wobei die Seitenrahmen 45 jeweils außenseitig umlaufende Balgklemmen für die Balgseitenwände 41 bilden. An der Stirnseite des Übergangsbalgs 40 wird dieser mit Anschlussleisten 70 am jeweiligen Fahrzeugteil eines Gelenkfahrzeugs befestigt.

**Fig. 6** zeigt von unten einen Ausschnitt einer Unterseite des in Fig. 5 gezeigten Übergangsbalgs 40 mit mehreren daran befestigten Montagesets 1. Der Balgboden 50 umfasst ein Bodentuch 51, das an seiner Unterseite mehrere hintereinander angeordnete Balgschlaufen 52 aufweist. In Einbaulage sind die Bodenleisten 55 jeweils durch die Balgschlaufen 52 an der Unterseite des Bodentuchs 51 durchgesteckt.

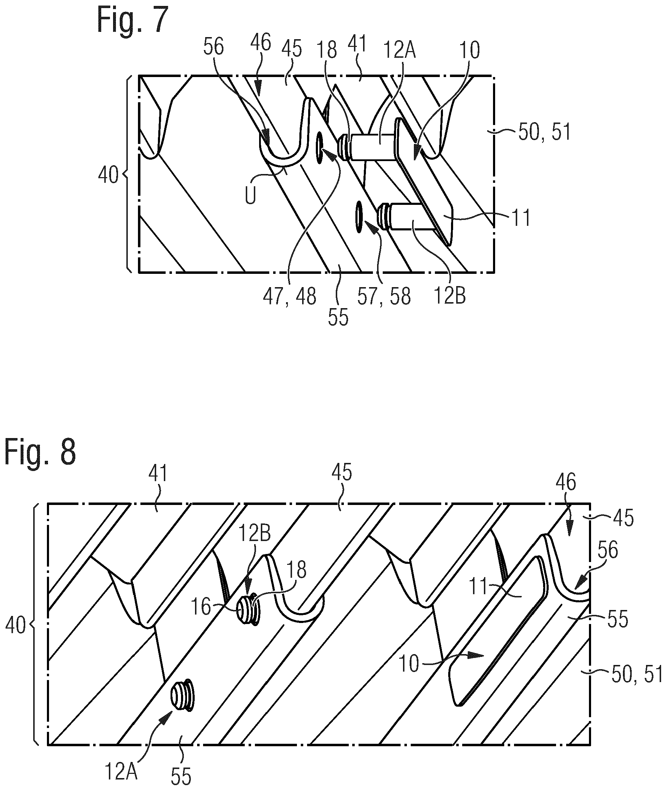

**Fig. 7** zeigt von der Seite eine Bolzenleiste 10 mit den zwei Bolzen 12A,12B vor deren Befestigung in Durchgangsbohrungen eines Seitenrahmens 45 sowie einer Bodenleiste 55 des in Fig. 6 gezeigten Übergangsbalgs 40. Der hier gezeigte Seitenrahmen 45 weist ein im Wesentlichen U-förmiges Profil 46 auf. An seinem in Einbaulage unteren Rahmenende weist jeder Seitenrahmen jeweils zwei voneinander beabstandete Durchgangsbohrungen 47 auf, wobei die Durchgangsbohrungen 47 jeweils denselben Bohrungsdurchmesser 48 haben.

Die Bodenleiste 55 weist ein Profil 56 mit einer im Wesentlichen U-förmigen Profilausnehmung auf, wobei dieses Profil 56 so beschaffen ist, dass die Profilausnehmung der Bodenleiste 55 in Einbaulage von unten an das Profil 46 des Seitenrahmens 45 ansteckbar ist. In anderen Worten ist in Einbaulage einen Rahmenabschnitt eines Seitenrahmens 45 innerhalb der Profilausnehmung der Bodenleiste 55 eingesteckt. Die Bodenleiste 55 weist an ihren gegenüberliegenden Leistenenden jeweils zwei voneinander beabstandete Durchgangsbohrungen 57 auf, wobei die Durchgangsbohrungen 57 jeweils denselben Bohrungsdurchmesser 58 haben. Die zwei benachbarten Durchgangsbohrungen 57 der Bodenleiste 55 sind korrespondierend zu den zwei benachbarten Durchgangsbohrungen 47 des Seitenrahmens 45 positioniert. In Einbaulage, wie dies in Fig. 7 veranschaulicht ist, sind die Durchgangsbohrungen 57 der Bodenleiste 55 sowie die Durchgangsbohrungen 47 des Seitenrahmens 45 deckungsgleich zueinander positioniert, sodass die Bolzen 12A,12B der Bolzenleiste 10 durch die deckungsgleich angeordneten Durchgangsbohrungen 47,57 hindurch gesteckt werden können.

Mit dem Bezugszeichen U wird die Balgunterkante U bezeichnet, welche hier die Unterkante U der Bodenleiste 55 ist.

**Fig. 8** zeigt schräg von unten zwei Bolzenleisten 10, die jeweils bereits in den Durchgangsbohrungen 47,57 eines Seitenrahmens 45 sowie einer Bodenleiste 55 des in Fig. 6 gezeigten Übergangsbalgs 40 eingeführt sind. Von der ersten Bolzenleiste 10 links im Bild sieht man im Wesentlichen nur die beiden Bolzenköpfe 16 der zwei Bolzen 12A,12B samt ihren Ringnuten 18, die aus den Durchgangsbohrungen 57 der Bodenleiste 55 vorragen. Von der zweiten Bolzenleiste 10 rechts im Bild, welche seitenverkehrt zur ersten Bolzenleiste 10 in den entsprechenden Durchgangsbohrungen 47,57 eingesteckt ist, sieht man nur die Bolzengrundplatte 11.

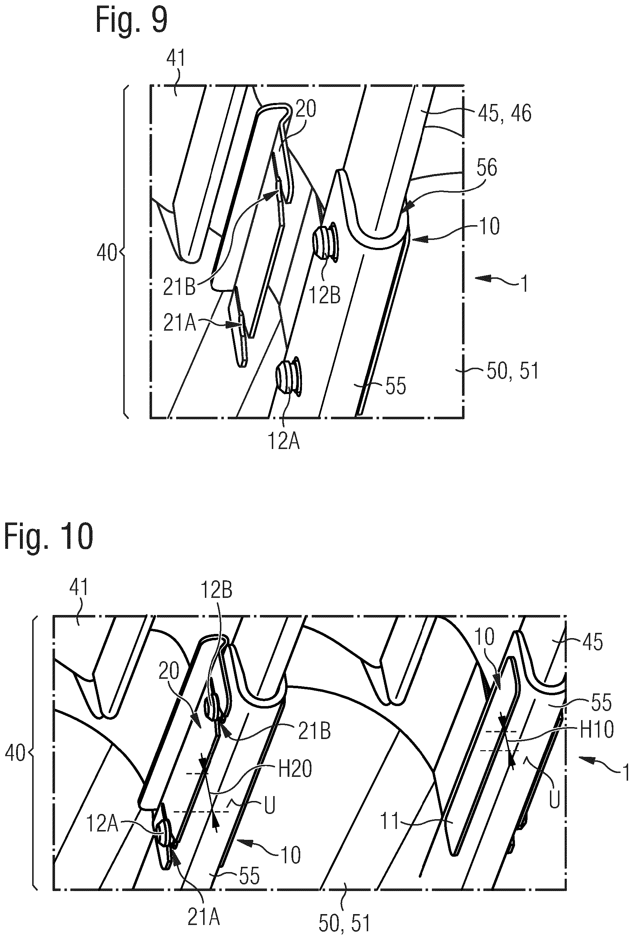

**Fig. 9** zeigt schräg von unten eine Sicherungsplatte 20 vor deren Befestigung an einer der in Fig. 8 gezeigten Bolzenleisten 10.

**Fig. 10** zeigt in einem nächsten Schritt die in Fig. 8 gezeigte Anordnung, wobei die in Fig. 9 gezeigte Sicherungsplatte 20 bereits an den Bolzenköpfen 16 der Bolzenleiste 10 befestigt ist. In befestigter Lage des Montagesets 1 sind die Bolzenleiste 10 und die Sicherungsplatte 20 jeweils so miteinander fixiert, dass in einer Höhenrichtung Z gesehen die Bolzenleiste 10 um einen ersten Höhenabstand H10 sowie die Sicherungsplatte 20 um einen zweiten Höhenabstand H20 jeweils erhöht in Bezug zu einem Höhenniveau einer Balgunterkante U angeordnet sind. Die Balgunterkante U wird hier von der Unterkante U der Bodenleiste 55 gebildet. Beschädigungen des Montagesets 1 im laufenden Fahrbetrieb eines Gelenkfahrzeugs können somit verhindert werden.

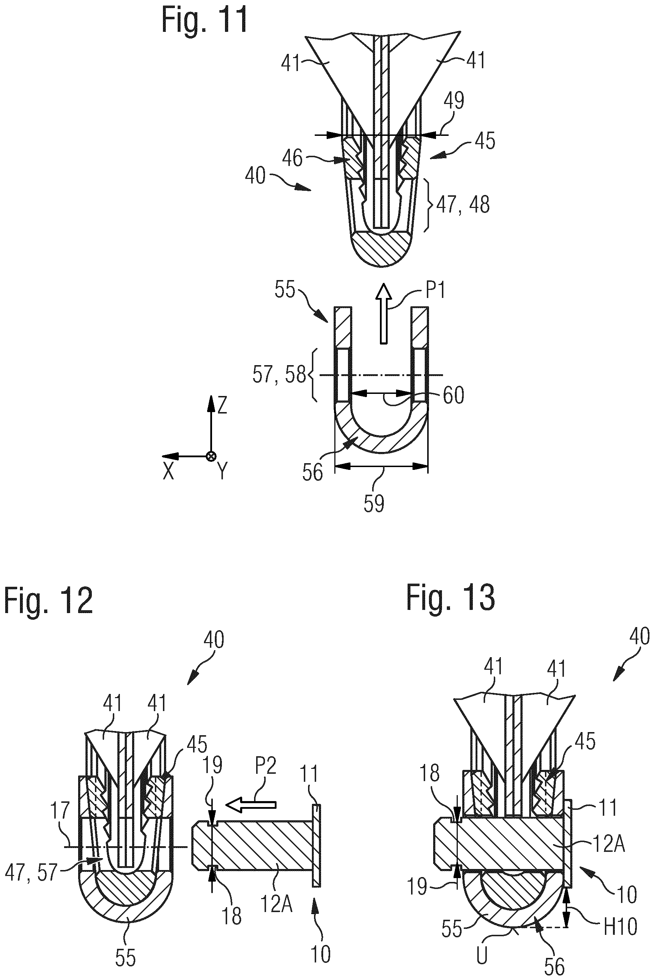

Die **Figuren 11 bis 16** veranschaulichen jeweils in teilweisen Schnittansichten von der Seite die Befestigung des Montagesets 1 an einem Übergangsbalg 40. Die Höhenrichtung des Übergangsbalgs 40 entspricht jeweils der Z-Achsenrichtung.

**Fig. 11** zeigt das Anstecken eines Leistenabschnitts einer Bodenleiste 55 in einer ersten Pfeilrichtung P1 an einem Rahmenabschnitt eines Seitenrahmens 45 des Übergangsbalgs 40. Die Bodenleiste 55 weist hier beispielsweise ein U-förmiges Profil 56 mit einer Außenbreite 59 der beiden Profilschenkel sowie mit einer U-förmigen Profilausnehmung mit einer lichten Innenweite 60 zwischen den beiden Profilschenkeln auf. Der Seitenrahmen 45, welcher als Balgklemme für die Balgseitenwand 41 dient, hat hier beispielsweise ein U-förmiges Profil 46 mit einer Außenbreite 49, welche Außenbreite 49 des Seitenrahmens 45 kleiner oder gleich der lichten Innenweite 60 der U-förmigen Profilausnehmung der Bodenleiste 55 ist.

**Fig. 12** die in Fig. 11 gezeigte Anordnung, wobei die Bodenleiste 55 bereits am Seitenrahmen 45 angesteckt ist, vor dem seitlichen Einführen einer Bolzenleiste 10. Die Bodenleiste 55 und der Seitenrahmen 45 sind in Einbaulage so zusammengesteckt, dass die jeweils zwei Durchgangsbohrungen 47 des Seitenrahmens 45 deckungsgleich mit den jeweils zwei Durchgangsbohrungen der Bodenleiste 55 positioniert sind. Zum Fixieren der zusammengesteckten Lage des Seitenrahmens 45 mit der Bodenleiste 55 werden die zwei Bolzen 12A,12B der Bolzenleiste 10 in einer zweiten Pfeilrichtung P2 seitlich in die deckungsgleich korrespondierenden Durchgangsbohrungen 47,57 eingeführt.

**Fig. 13** zeigt die in Fig. 12 dargestellte Anordnung, wobei die zwei Bolzen 12A,12B der Bolzenleiste 10 bereits in die Durchgangsbohrungen 47,57 des Seitenrahmens 45 sowie der Bodenleiste 55 eingeführt sind. Die Bolzenleiste 10 ist um einen ersten Höhenabstand H10 erhöht in Bezug zu einem Höhenniveau einer Balgunterkante U angeordnet. Die Balgunterkante U wird hier von der Unterkante U der Bodenleiste 55 gebildet.

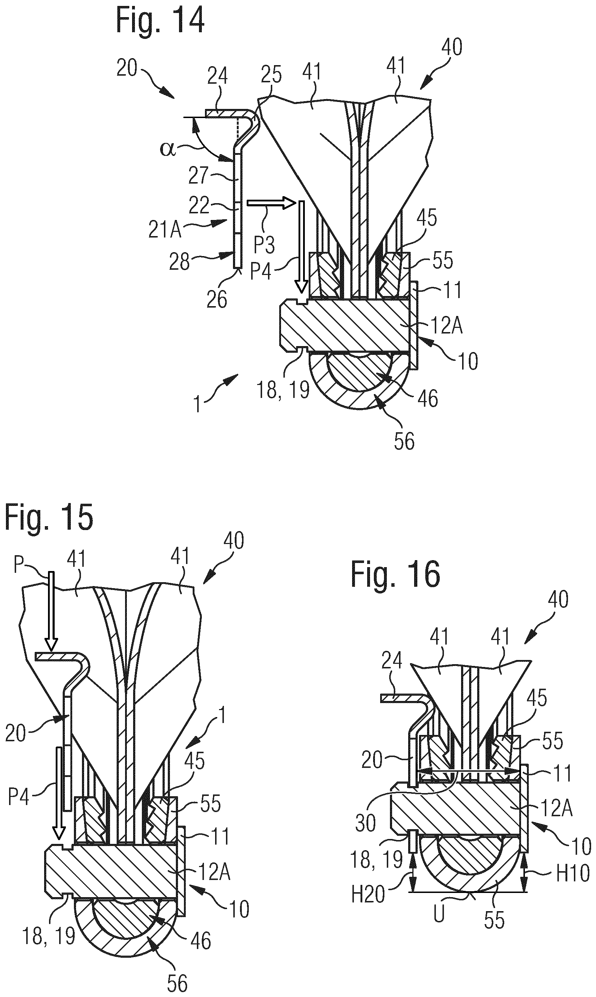

**Fig. 14** zeigt ausgehend von der in Fig. 13 dargestellten Anordnung den Montagestatus vor dem Ansetzen einer Sicherungsplatte 20 zum Fixieren der Bolzenleiste 10. Dazu wird die Sicherungsplatte 20 in einer dritten Pfeilrichtung P3 so positioniert, bis die Sicherungsplatte 20 fluchtend mit den Ringnuten 18 an den zwei Bolzen 12A,12B ausgerichtet ist. Anschließend wird die Sicherungsplatte 20 in einer vierten Pfeilrichtung P4 an den Bolzen 12A,12B der Bolzenleiste 10 fixiert.

**Fig. 15** zeigt ausgehend von Fig. 14 die bereits justierte Sicherungsplatte 20, welche fluchtend mit den Ringnuten 18 an den zwei Bolzen 12A,12B der Bolzenleiste 10 ausgerichtet ist.

**Fig. 16** zeigt schließlich das befestigte Montageset 1 am Übergangsbalg 40, wobei die Sicherungsplatte 20 an der Bolzenplatte 10 fixiert ist. Die Ringnut 18 des ersten Bolzens 12A ist in die Rastausnehmung 22 der ersten Aufnahme 21A und die Ringnut 18 des zweiten Bolzens 12B ist in die Rastausnehmung 22 der zweiten Aufnahme 21B der Sicherungsplatte 20 eingerastet. In miteinander verbundener Lage ist die Bolzengrundplatte 11 in einem lichten Weitenabstand 30 zur Sicherungsplatte 20 fixiert. Die Bodenleiste 55 und ein darin eingesteckter Abschnitt des Seitenrahmens 45 befinden sich innerhalb des lichten Weitenabstands 30 eingeklemmt zwischen der Bolzengrundplatte 11 und der Sicherungsplatte 20.

In befestigter Lage des Montagesets 1 sind die Bolzenleiste 10 und die Sicherungsplatte 20 jeweils so miteinander fixiert, dass in einer Höhenrichtung Z gesehen die Bolzenleiste 10 um einen ersten Höhenabstand H10 sowie die Sicherungsplatte 20 um einen zweiten Höhenabstand H20 jeweils erhöht in Bezug zu einem Höhenniveau einer Balgunterkante U angeordnet sind. Die Balgunterkante U wird hier von der Unterkante U der Bodenleiste 55 gebildet. Beschädigungen des Montagesets 1 im laufenden Fahrbetrieb eines Gelenkfahrzeugs können somit verhindert werden.

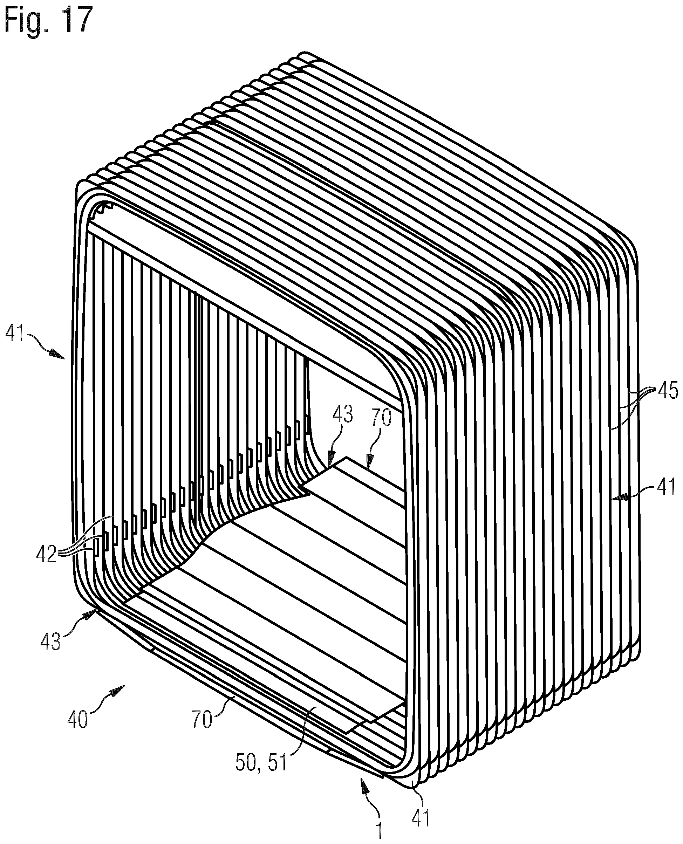

**Fig. 17** in einer Schrägansicht von oben einen Übergangsbalg 40 mit einem daran befestigten Montageset 1. Es wird dazu auf die vorgenannte Beschreibung von Fig. 5 verwiesen, wobei Fig. 5 einen Ausschnitt des Übergangsbalgs 40 mit dem daran befestigten Montageset 1 zeigt.

### BEZUGSZEICHENLISTE

- 1: Montageset
- 10: Bolzenleiste
- 11: Bolzengrundplatte
- 12A: erster Bolzen
- 12B: zweiter Bolzen
- 13: Abstand zwischen den Bolzen
- 14: Bolzendurchmesser
- 15: Bolzenlänge
- 16: Bolzenkopf
- 17: Bolzenachse
- 18: Ringnut, Einstich
- 19: Nutdurchmesser
- 20: Sicherungsplatte
- 21A: erste Aufnahme
- 21B: zweite Aufnahme
- 22: Rastausnehmung
- 23: Abstand zwischen den Aufnahmen
- 24: Griffleiste
- 25: Biegeabschnitt; Falzabschnitt
- 26: erste Längskante der Sicherungsplatte
- 27: Dehnungsspalt
- 28: konischer Einführabschnitt der Aufnahme
- 29: Ausnehmungsdurchmesser
- 30: Weitenabstand zwischen Bolzengrundplatte und Sicherungsplatte
- 40: Übergangsbalg
- 41: Balgseitenwand
- 42: innenseitige Umlaufkante
- 43: Verschlusseinrichtung zwischen Balgseitenwand und Balgboden
- 45: Seitenrahmen; Balgklemme
- 46: Profil des Seitenrahmens
- 47: Durchgangsbohrung des Seitenrahmens
- 48: Bohrungsdurchmesser des Seitenrahmens
- 49: Breite des Seitenrahmens
- 50: Balgboden
- 51: Bodentuch
- 52: Balgschlaufe
- 55: Bodenleiste
- 56: Profil der Bodenleiste mit Ausnehmung
- 57: Durchgangsbohrung der Bodenleiste
- 58: Bohrungsdurchmesser der Bodenleiste
- 59: Außenbreite der Bodenleiste
- 60: lichte Innenweite der Profilausnehmung der Bodenleiste
- 70: Anschlussleiste für Fahrzeugteil
- α: Winkel zwischen Griffabschnitt und Sicherungsplatte
- H10: Höhenabstand der Bolzenleiste von der Balgunterkante
- H20: Höhenabstand der Sicherungsplatte von der Balgunterkante
- P: Betätigungsrichtung der Griffleiste (Pfeil)
- P1: erste Pfeilrichtung
- P2: zweite Pfeilrichtung
- P3: dritte Pfeilrichtung
- P4: vierte Pfeilrichtung
- U: Balgunterkante; Unterkante der Bodenleiste
- X: X-Achsenrichtung
- X: Y-Achsenrichtung
- Z: Z-Achsenrichtung

## Patentansprüche

1. Montageset (1) für die lösbare Befestigung einer Bodenleiste (55) an einem Seitenrahmen (45) eines zwischen zwei, vorzugsweise gelenkig, miteinander verbundenen Fahrzeugteilen angeordneten Übergangsbalgs (40), das Montageset (1) umfassend:
- eine Bolzenleiste (10) mit einer Bolzengrundplatte (11) sowie mit einem ersten Bolzen (12A) und einem vom ersten Bolzen (12A) beabstandeten (13) zweiten Bolzen (12B), wobei die zwei Bolzen (12A,12B) jeweils an der Bolzengrundplatte (11) befestigt sind und jeweils in derselben Bolzenachsenrichtung (17) von der Bolzengrundplatte (11) abstehen, wobei jeder Bolzen (12A,12B) jeweils eine außenseitige Ringnut (18) mit einem Nutdurchmesser (19) aufweist;
- eine Sicherungsplatte (20) mit einer ersten Aufnahme (21A) und einer davon beabstandeten (23) zweiten Aufnahme (21B), wobei die zwei Aufnahmen (21A,21B) jeweils zu einer ersten Längskante (26) der Sicherungsplatte (20) geöffnet sind und jeweils eine Rastausnehmung (22) mit einem Ausnehmungsdurchmesser (29) aufweisen, welcher Ausnehmungsdurchmesser (29) so dimensioniert ist, dass jeweils ein Bolzen (12A,12B) mit seiner Ringnut (18) in der Rastausnehmung (22) fixierbar ist, wobei der Abstand (23) der Aufnahmen (21A,21B) der Sicherungsplatte (20) zueinander mit dem Abstand (13) der Bolzen (12A,12B) der Bolzenleiste (10) zueinander korrespondiert;
- wobei die Bolzenleiste (10) und die Sicherungsplatte (20) lösbar miteinander verbindbar sind und dazu die Bolzenleiste (10) so eingerichtet ist, dass die Ringnut (18) des ersten Bolzens (12A) in die Rastausnehmung (22) der ersten Aufnahme (21A) und die Ringnut (18) des zweiten Bolzens (12B) in die Rastausnehmung (22) der zweiten Aufnahme (21B) der Sicherungsplatte (20) einrastbar sind, wobei in miteinander verbundener Lage die Bolzengrundplatte (11) in einem lichten Weitenabstand (30) zur Sicherungsplatte (20) fixierbar ist.

2. Montageset (1) nach Anspruch 1, **dadurch gekennzeichnet, dass** jeder der zwei Bolzen (12A,12B) der Bolzenleiste (10) jeweils einen freien Bolzenkopf (16) aufweist, wobei vorzugsweise die zwei Bolzen (12A,12B) baugleich ausgeführt sind und jeweils denselben Bolzendurchmesser (14) aufweisen.

3. Montageset (1) nach Anspruch 1 oder 2, **dadurch gekennzeichnet, dass** die zwei Aufnahmen (21A,21B) der Sicherungsplatte (20) jeweils einen konischen Einführabschnitt (28) aufweisen, wobei der konische Einführabschnitt (28) jeweils zwischen einer Rastausnehmung (22) und der ersten Längskante (26) der Sicherungsplatte (20) angeordnet ist und sich von der jeweiligen Rastausnehmung (22) in Richtung zur ersten Längskante (26) hin weitet.

4. Montageset (1) nach einem der Ansprüche 1 bis 3, **dadurch gekennzeichnet, dass** die zwei Aufnahmen (21A,21B) der Sicherungsplatte (20) jeweils einen Dehnungsspalt (27) aufweisen, wobei der Dehnungsspalt (27) jeweils an der der ersten Längskante (26) abgewandten Seite der Rastausnehmungen (22) angeordnet ist und sich ausgehend von der jeweiligen Rastausnehmung (22) in einer zu der ersten Längskante (26) quer angeordneten, vorzugsweise normal angeordneten, Richtung erstreckt.

5. Montageset (1) nach einem der Ansprüche 1 bis 4, **dadurch gekennzeichnet, dass** die Sicherungsplatte (20) an einer der ersten Längskante (26) gegenüberliegenden Längsseite eine Griffleiste (24) aufweist, wobei sich die Griffleiste (24) vorzugsweise in Längsrichtung der Sicherungsplatte (20) erstreckt.

6. Montageset (1) nach Anspruch 5, **dadurch gekennzeichnet, dass** die Griffleiste (24) einteilig mit der Sicherungsplatte (20) verbunden ist.

7. Montageset (1) nach Anspruch 5 oder 6, **dadurch gekennzeichnet, dass** die Griffleiste (24) ein gebogener oder gefalzter Randabschnitt der Sicherungsplatte (20) ist, wobei ein Winkel (α) zwischen der Griffleiste (24) und der Sicherungsplatte (20) von 70° bis 110°, vorzugsweise von 80° bis 100°, besonders bevorzugt 90°, beträgt.

8. Montageset (1) nach einem der Ansprüche 1 bis 7, **dadurch gekennzeichnet, dass** ein in Richtung der jeweiligen Bolzenachse (17) gesehener Abstand von der Bolzenleiste (10) bis zur außenseitigen Ringnut (18) des jeweiligen Bolzens (12A,12B) jeweils dem lichten Weitenabstand (30) entspricht, in welchem die Bolzenleiste (10) und die Sicherungsplatte (20) in miteinander verbundener Lage fixierbar sind.

9. Montageset (1) nach einem der Ansprüche 1 bis 8, **dadurch gekennzeichnet, dass** die zwei Bolzen (12A,12B) normal zur Bolzengrundplatte (11) befestigt sind, wobei die Bolzenachsen (17) im Wesentlichen rechtwinkelig zur Bolzengrundplatte (11) verlaufen.

10. Übergangsbalg (40) zwischen zwei, vorzugsweise gelenkig, miteinander verbundenen Fahrzeugteilen mit einem daran befestigten Montageset (1) nach einem der Ansprüche 1 bis 9.

11. Übergangsbalg (40) nach Anspruch 10, **dadurch gekennzeichnet, dass** der Übergangsbalg (40) zwei einander gegenüberliegende Balgseitenwände (41) sowie einen auswechselbaren Balgboden (50) umfasst, wobei jeweils in Einbaulage
- jede Balgseitenwand (41) jeweils mit mehreren Seitenrahmen (45) verbunden ist,
- der Balgboden (50) jeweils mit mehreren Bodenleisten (55) verbunden ist, und
- zumindest ein Randabschnitt des Balgbodens (50) mit einer Verschlusseinrichtung (43) mit einer Balgseitenwand (41) verbunden ist,
wobei in befestigter Lage des Montagesets (1) die Bolzenleiste (10) und die Sicherungsplatte (20) so miteinander fixiert sind, dass innerhalb des lichten Weitenabstands (30) zwischen der Bolzengrundplatte (11) und der Sicherungsplatte (20) jeweils ein Leistenabschnitt, vorzugsweise ein Leistenende, einer Bodenleiste (55) an einem Rahmenabschnitt, vorzugsweise an einem Rahmenende, eines Seitenrahmens (45) ortsfest befestigt ist.

12. Übergangsbalg (40) nach Anspruch 10 oder 11, **dadurch gekennzeichnet, dass** in befestigter Lage des Montagesets (1) die Bolzenleiste (10) und die Sicherungsplatte (20) jeweils so miteinander fixiert sind, dass in Höhenrichtung (Z) gesehen die Bolzenleiste (10) um einen ersten Höhenabstand (H10) sowie die Sicherungsplatte (20) um einen zweiten Höhenabstand (H20) jeweils erhöht in Bezug zu einem Höhenniveau einer Balgunterkante (U), vorzugsweise einer Unterkante (U) einer Bodenleiste (55) oder eines Rahmenabschnitts eines Seitenrahmens (45), angeordnet sind.

13. Übergangsbalg (40) nach einem der Ansprüche 10 bis 12, **dadurch gekennzeichnet, dass** jeder Seitenrahmen (45), vorzugsweise an seinem Rahmenende, jeweils zwei voneinander beabstandete Durchgangsbohrungen (47) aufweist und jede Bodenleiste (55), vorzugsweise an ihren gegenüberliegenden freien Leistenenden, jeweils zwei voneinander beabstandete Durchgangsbohrungen (57) aufweist, wobei in Einbaulage jeweils ein Leistenabschnitt, vorzugsweise ein Leistenende, der Bodenleiste (55) mit jeweils einem Rahmenabschnitt, vorzugsweise einem Rahmenende, des Seitenrahmens (45) verbunden ist und die Durchgangsbohrungen (57) der Bodenleisten (55) korrespondierend zu den Durchgangsbohrungen (47) der Seitenrahmen (45) angeordnet sind, wobei das Montageset (1) so angeordnet ist, dass in befestigter Lage die beiden Bolzen (12A,12B) der Bolzenleiste (10) jeweils durch die deckungsgleich angeordneten, korrespondierenden Durchgangsbohrungen (47,57) des Seitenrahmens (45) sowie der Bodenleiste (55) hindurchgesteckt sind, und wobei die Sicherungsplatte (20) an der der Bolzengrundplatte (11) gegenüberliegenden Seite des Seitenrahmens (45) oder der Bodenleiste (55) angeordnet ist, wobei die Ringnut (18) des ersten Bolzens (12A) in die Rastausnehmung (22) der ersten Aufnahme (21A) und die Ringnut (18) des zweiten Bolzens (12B) in die Rastausnehmung (22) der zweiten Aufnahme (21B) der Sicherungsplatte (20) eingerastet sind.

14. Übergangsbalg (40) nach einem der Ansprüche 10 bis 13, **dadurch gekennzeichnet, dass** zumindest eine Bodenleiste (55) an zumindest einem Rahmenabschnitt eines Seitenrahmens (45) ansteckbar ist.

15. Übergangsbalg (40) nach einem der Ansprüche 10 bis 14, **dadurch gekennzeichnet, dass** zumindest eine Bodenleiste (55) ein U-förmiges Profil (56) mit einer Außenbreite (59) der beiden Profilschenkel sowie mit einer U-förmigen Profilausnehmung mit einer lichten Innenweite (60) zwischen den beiden Profilschenkeln aufweist, und dass zumindest ein Seitenrahmen (45) ein U-förmiges Profil (46) mit einer Außenbreite (49) aufweist, welche Außenbreite (49) des Seitenrahmens (45) kleiner oder gleich der lichten Innenweite (60) der U-förmigen Profilausnehmung der Bodenleiste (55) ist, wobei in Einbaulage ein Rahmenabschnitt des Seitenrahmens (45) innerhalb der Bodenleiste (55) eingesteckt ist.

16. Verfahren zum Befestigen eines Montagesets (1) nach einem der Ansprüche 1 bis 9 an einem Übergangsbalg (40) zwischen zwei, vorzugsweise gelenkig, miteinander verbundenen Fahrzeugteilen, **gekennzeichnet durch** die folgenden Schritte:
-a- Bereitstellen eines Übergangsbalgs (40) mit zwei einander gegenüberliegenden Balgseitenwänden (41) sowie mit einem auswechselbaren Balgboden (50), wobei in Einbaulage jede Balgseitenwand (41) jeweils mit mehreren Seitenrahmen (45) verbunden ist und jeder Seitenrahmen (45) an seinem Rahmenende jeweils zwei voneinander beabstandete Durchgangsbohrungen (47) aufweist, wobei der Balgboden (50) in Einbaulage jeweils mit mehreren Bodenleisten (55) verbunden ist und jede Bodenleiste (55) an ihren gegenüberliegenden freien Leistenenden jeweils zwei voneinander beabstandete Durchgangsbohrungen (57) aufweist;
-b- Anstecken (P1) eines Leistenabschnitts, vorzugsweise eines Leistenendes, einer Bodenleiste (55) an einem Rahmenabschnitt, vorzugsweise an einem Rahmenende, eines Seitenrahmens (45) derart, dass zumindest ein Abschnitt der Bodenleiste (55) zumindest einen Abschnitt des Seitenrahmens (45) umgibt oder umgekehrt zumindest ein Abschnitt des Seitenrahmens (45) zumindest einen Abschnitt der Bodenleiste (55) umgibt, und wobei die zwei Durchgangsbohrungen (57) der Bodenleiste (55) deckungsgleich mit den korrespondierenden zwei Durchgangsbohrungen (47) des Seitenrahmens (45) positioniert sind;
-c- Seitliches Einführen (P2) der zwei Bolzen (12A,12B) der Bolzenleiste (10) in die zwei deckungsgleich angeordneten Durchgangsbohrungen (47,57) sowohl des Seitenrahmens (45), als auch der Bodenleiste (55), bis die zwei Bolzen (12A,12B) durch die Durchgangsbohrungen (47,57) des Seitenrahmens (45) und der Bodenleiste (55) hindurchragen und jeder der zwei Bolzen (12A,12B) mit seiner außenseitigen Ringnut (18) jeweils die Durchgangsbohrungen (47,57) überragt;
-d- Ansetzen (P3) der Sicherungsplatte (20) an den zwei Bolzen (12A,12B), wobei die Ringnut (18) des ersten Bolzens (12A) in die erste Aufnahme (21A) und die Ringnut (18) des zweiten Bolzens (12B) in die zweite Aufnahme (21B) der Sicherungsplatte (20) eingeführt wird;
-e- Fixieren (P,P4) der Sicherungsplatte (20) an den Bolzen (12A,12B) der Bolzenleiste (10), wobei jede der zwei Rastausnehmungen (22) der Sicherungsplatte (20) jeweils in eine Ringnut (18) eines der zwei Bolzen (12A,12B) eingerastet wird und die Bolzengrundplatte (11) in einem lichten Weitenabstand (30) zur Sicherungsplatte (20) positioniert wird.

17. Verfahren nach Anspruch 16, **dadurch gekennzeichnet, dass** in befestigter Lage des Montagesets (1) die Bolzenleiste (10) und die Sicherungsplatte (20) jeweils so miteinander fixiert werden, dass in Höhenrichtung (Z) gesehen die Bolzenleiste (10) um einen ersten Höhenabstand (H10) sowie die Sicherungsplatte (20) um einen zweiten Höhenabstand (H20) jeweils erhöht in Bezug zu einem Höhenniveau einer Balgunterkante (U), vorzugsweise einer Unterkante (U) einer Bodenleiste (55) oder eines Rahmenabschnitts eines Seitenrahmens (45), positioniert werden.
